# EUROPEAN PATENT APPLICATION

(11) **EP 4 789 804 A1**
(43) Date of publication of application: **12.08.2026**
(21) Application number: 25729997.4
(22) Date of filing: 17.01.2025
(51) Int. Cl.: B23K 9/26, B23K 9/12, B23K 9/173

(54) **CONTACT TIP FOR WELDING**

(30) Priority: 18.12.2024 JP 2024221260
(71) Applicant: Shinkokiki Co., Ltd., Nagoya-shi Aichi 452-0822 (JP)
(72) Inventor: FUKIZAWA Takeo, Nagoya-shi, Aichi 452-0822 (JP)
(74) Representative: Mewburn Ellis LLP
(86) International application number: PCT/JP2025/001254
(87) International publication number: WO 2026/133571

(57) **Abstract**

A welding contact tip in which a distal end of a copper alloy adapter 10 having a first center hole 11 is screwed to a molybdenum alloy housing 20 having a second center hole 21 having a diameter smaller than a diameter of the first center hole. The adapter 10 and the housing 20 are screwed with each other with a large torque to plastically deform threads, and the adapter and the housing are crimped and fixed. The length of the second center hole 21 is set to 1/3 or less of the length of the first center hole 11, and a welding current intensively flows through the welding wire at the inner face of the second center hole 21. The welding wire is less likely to be clogged, the welding current is less likely to vary, and the service life can be significantly extended.

## Description

### TECHNICAL FIELD

The present invention relates to a welding contact tip used for arc welding.

### BACKGROUND ART

A welding contact tip used for arc welding is a component that is attached to a distal end of a torch of a welding machine and has a role of supplying a welding current to a welding wire while guiding the welding wire fed through the torch toward a welding position.

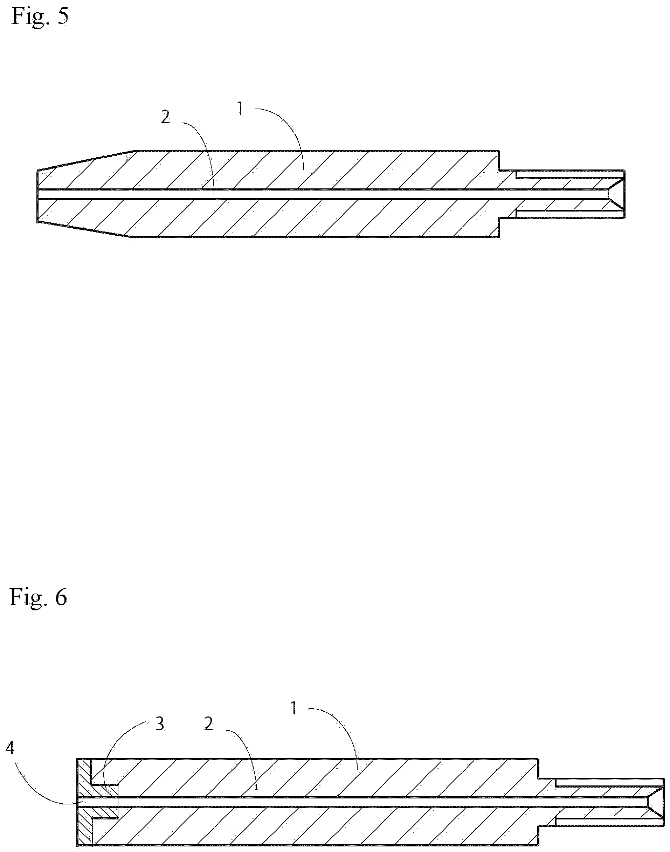

As shown in Fig. 5, a conventional welding contact tip usually has a copper alloy-made body 1 in which a center hole 2 having a constant diameter is formed. Since the welding wire is nipped by the roller and fed from the proximal end side of the contact tip, in a case where the clearance between the inner diameter of the center hole 2 and the outer diameter of the welding wire is small, the contact resistance with the inner face of the center hole 2 increases, which may cause an accident in which the welding wire is clogged inside and is not smoothly pushed out. Therefore, for example, a welding contact tip in which, in a case where the outer diameter of the welding wire is 1.2 mm, the inner diameter of the center hole 2 is about 1.5 mm that is large enough, and a sufficient clearance is provided has been common. However, when the clearance is increased in this way, the contact between the inner face of the center hole 2 and the welding wire is unstable, and there is a problem that the welding current easily varies.

While the total length of the welding contact tip is 40 mm or 45 mm in accordance with the specification of the welding machine, it is not easy to accurately perforate the welding contact tip with the thin center hole 2 having an inner diameter of around 1.5 mm over the total length. If the center hole 2 is slightly bent or eccentric, the welding wire is easily clogged, and the welding current easily varies.

As described above, the conventional welding contact tip has a problem that when the clearance is increased in order to prevent clogging of the welding wire, the welding current tends to vary, and an important problem that the hole diameter of the center hole 2 gradually increases due to contact wear with the welding wire. In particular, since the distal end portion, of the center hole 2, close to the welding position receives high heat due to the arc, the hole diameter is easily enlarged, and accordingly, the feeding direction of the welding wire is deviated, and the welding position may be wrong. Therefore, conventionally, it is necessary to interrupt the welding work and replace the welding contact tip with a new one every predetermined time, which causes a decrease in work efficiency of the welding work and an increase in welding cost.

In order to solve this problem, as shown in Fig. 6, Patent Literature 1 describes a welding contact tip in which a distal end tip 3 made of hard metal or ceramic is fitted into a distal end portion of the center hole 2. This welding contact tip can be expected to have an effect of preventing an increase in the hole diameter of the distal end portion, but when the diameter of the center hole 2 of the body 1 increases while the hole diameter of a center hole 4 of the distal end tip 3 is constant, a step is generated at the connection portion with the distal end tip 3, which causes clogging. Further, in the contact tip having the structure of Fig. 6, the problem that the welding current is likely to vary when the clearance of the center hole 2 is increased in order to prevent clogging has not been solved. Further, there is a problem that the manufacturing cost of the welding contact tip increases.

### CITATION LIST

### PATENT LITERATURE

Patent Literature 1: JP 1989-15674 U

### SUMMARY OF INVENTION

### TECHNICAL PROBLEMS

Therefore, an object of the present invention is to solve the above-described conventional problems, and to provide a welding contact tip in which the welding wire is less likely to be clogged, the welding current is less likely to vary, and the time (service life) during which the welding contact tip can be continuously used is significantly extended.

### SOLUTION TO PROBLEMS

The present invention made to solve the above problems is a welding contact tip in which a distal end of a copper alloy adapter having a first center hole is screwed to a molybdenum alloy housing having a second center hole having a diameter smaller than a diameter of the first center hole, wherein a distal end of the first center hole and a proximal end of the second center hole are in contact with each other via a tapered hole portion, wherein the adapter and the housing are screwed with each other with a large torque to plastically deform threads, and the adapter and the housing are crimped and fixed, and wherein a length of the second center hole is set to 1/3 or less of a length of the first center hole, and a welding current intensively flows through a welding wire at an inner face of the second center hole.

It is preferable that the housing is made of a molybdenum alloy containing titanium, zirconium, carbon and a balance of molybdenum, and the adapter is made of a copper alloy containing chromium.

It is preferable that the inner diameter of the second center hole is set to be larger by 0.08 to 0.12 mm than the outer diameter of the welding wire to be used.

The total length of the adapter and the housing coupled together is preferably 40 to 45 mm, and the length of the second center hole is preferably 5 to 15 mm.

### ADVANTAGEOUS EFFECTS OF INVENTION

The welding contact tip of the present invention has a structure in which a housing having a second center hole having a diameter smaller than a first center hole is coupled to a distal end of an adapter having the first center hole, and a length of the second center hole is 1/3 or less of a length of the first center hole. In this way, by making the distal end side short second center hole small in diameter, a welding current intensively flows through the welding wire at the inner face thereof. In addition, when the long first center hole has a sufficient clearance as in the conventional product, the contact resistance with the welding wire is reduced, and clogging is less likely to occur.

Further, the welding contact tip of the present invention has a structure in which an adapter and a housing are screwed together with a large torque to plastically deform threads and the adapter and the housing are crimped and fixed. A welding contact tip in which a housing is detachably screwed to a distal end of an adapter has been conventionally known, and there is an advantage that the housing can be removed and replaced when a hole diameter of a distal end portion is enlarged. However, it is necessary to maintain the shape of the thread in order to make the housing replaceable, and the flank surface of the male screw and the flank surface of the female screw are in point contact when viewed microscopically. For this reason, a path through which the welding current supplied from the adapter flows to the distal end side housing is unstable, which causes variation in the welding current. On the other hand, when the threads are plastically deformed, and crimped and fixed as in the present invention, the male screw and the female screw reliably come into face contact with each other, the current conduction path from the adapter to the housing is stabilized, and variation in welding current is suppressed.

Further, in the welding contact tip of the present invention, since the adapter and the housing can be separately manufactured, the length of each center hole can be shortened, and the manufacturing process can be simplified. In addition, since the combination of the adapter and the housing can be freely selected before crimped and fixed, the welding contact tip having a total length of 40 mm or the welding contact tip having a total length of 45 mm can be easily manufactured, and the manufacturing cost can be reduced.

Furthermore, when the housing of the welding contact tip of the present invention is made of a molybdenum alloy containing titanium, zirconium, carbon, and the balance of molybdenum, and the adapter is made of a copper alloy containing chromium, the wear resistance is improved, the service life that can be continuously used can be 40 times or more the conventional service life, and the work efficiency of the welding work can be improved by reducing the frequency of replacement of the welding contact tip.

### BRIEF DESCRIPTION OF THE DRAWINGS

Fig. 1 is a central longitudinal sectional view of a welding contact tip according to an embodiment.
Fig. 2 is a partial cross-sectional view of the adapter.
Fig. 3 is a partial cross-sectional view of a housing.
Fig. 4 is a dimensional relationship diagram.
Fig. 5 is a cross-sectional view of a conventional contact tip.
Fig. 6 is a cross-sectional view of a contact tip disclosed in Patent Literature 1.

### DESCRIPTION OF EMBODIMENTS

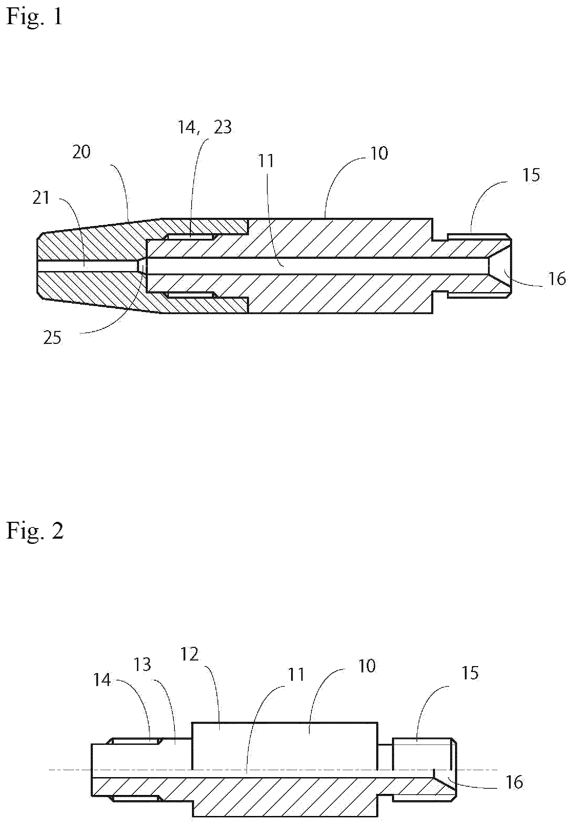

The preferred embodiment of the present invention will be described below. Fig. 1 is a central longitudinal sectional view of a welding contact tip according to the embodiment, in which reference numeral 10 denotes an adapter and reference numeral 20 denotes the distal end side housing. The adapter 10 has a first center hole 11, and the housing 20 has a second center hole 21.

As illustrated in Fig. 2, the adapter 10 includes a small-diameter cylindrical column portion 13 at the distal end of a cylindrical body 12, and has a male screw 14 on the distal end side outer periphery. A male screw 15 for attaching the welding contact tip to a torch of a welding machine is formed at the proximal end of the cylindrical body 12. Although the adapter 10 has the first center hole 11 over the total length, a rear end portion thereof is a tapered enlarged diameter portion 16, and the welding wire can be easily inserted into the first center hole 11.

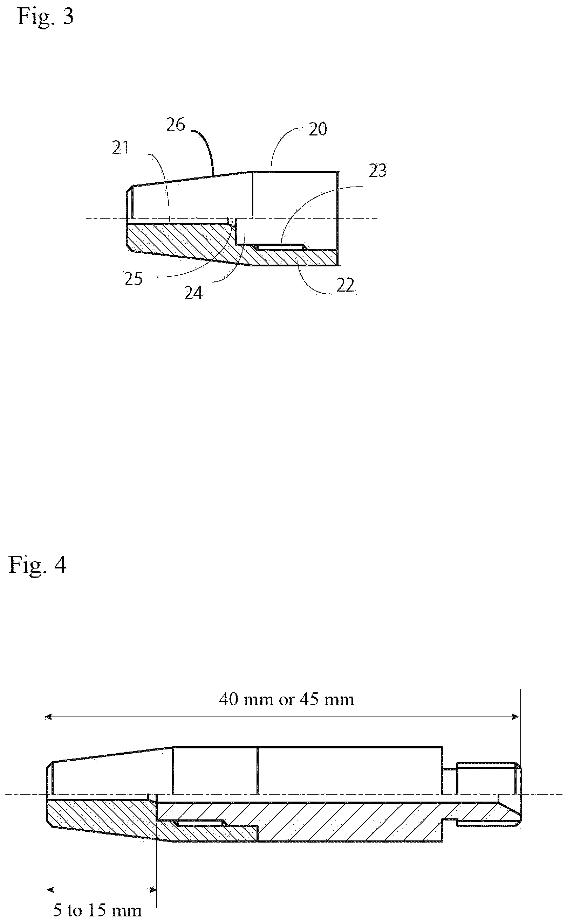

As illustrated in Fig. 3, the housing 20 includes a hollow cylindrical portion 22 at the rear of a tapered body 26, and a female screw 23 screwed with the male screw 14 of the adapter 10 is formed at the inner face of the central portion of the cylindrical portion 22. A hole portion 24 having the diameter same as the inner diameter of the female screw 23 is formed between the cylindrical portion 22 and the body 26. The second center hole 21 having a diameter smaller than the first center hole 11 is formed in the body 26 of the housing 20, and a tapered hole portion 25 is formed at a rear end portion thereof. The taper angle of the tapered hole portion 25 is 30° in this embodiment.

The material of the adapter 10 can be a copper alloy containing chromium, that is, chromium copper or zirconium chromium copper. The material of the housing 20 may be a molybdenum alloy. In this embodiment, a molybdenum alloy called TZM containing titanium, zirconium, carbon, and a balance of molybdenum is used. The conductivity of the molybdenum alloy is IACS22 to 25%, which is inferior to that of the copper alloy, but the molybdenum alloy is a hard material having HRB of about 100, and has excellent heat resistance because the recrystallization temperature is increased to 1300°C or higher. For this reason, the hole diameter of the distal end portion close to the welding point is less likely to increase, and the service life can be several tens of times longer than that of the conventional contact tip made of chromium copper.

The total length of the welding contact tip used in Japan is 40 mm or 45 mm in accordance with the specification of the welding machine, and as shown in Fig. 4, the length of the second center hole 21 of the housing 20 is shortened to 1/3 or less of the length of the first center hole 11 in any case. Specifically, the length of the second center hole is in a range of 5 to 15 mm. By shortening the length of the second center hole 21 of the housing 20 in this manner, it is easy to perform an operation of perforating the molybdenum alloy which is a hard material with the second center hole 21 having a small diameter. Therefore, the length of the first center hole 11 with which the adapter 10 is perforated reaches 40 mm at the maximum, but since the adapter 10 is made of a soft copper alloy, accurate perforation is possible. When the length of the second center hole 21 is less than 5 mm, the contact distance with the welding wire is insufficient, and the welding current is unstable. On the other hand, when the length exceeds 15 mm, the perforation operation is not easy, and the current conduction position from the second center hole 21 to the welding wire is unstable, and the effect of the welding current intensively flowing through the welding wire at the inner face of the second center hole 21, which is a feature of the present invention, is deteriorated. As described above, one feature of the invention of the present application is that the length of the second center hole 21 of the housing 20 made of a molybdenum alloy is shortened.

As illustrated in Fig. 1, the adapter 10 and the housing 20 are integrated by screwing the male screw 14 and the female screw 23, and the distal end of the first center hole 11 and the proximal end of the second center hole 21 are in contact with each other via the tapered hole portion 25. The hole diameter of the first center hole 11 of the adapter 10 is set to have a sufficient clearance in consideration of clogging as in the conventional case. On the other hand, the clearance of the inner diameter of the second center hole 21 is very small.

Specifically, when the wire diameter of the welding wire is 1.2 mm, the hole diameter of the first center hole 11 of the adapter 10 is 1.5 mm, and the clearance of the first center hole 11 is 0.3 mm in diameter and 0.15 mm in one side. On the other hand, the hole diameter of the second center hole 21 is 1.3 mm, and the clearance is 0.1 mm in diameter and 0.05 mm in one side, and the clearance of the second center hole 21 is 1/3 of the clearance of the first center hole 11. The absolute values of the clearance vary depending on the welding wire diameter to be used, and as the wire diameter increases, the clearance also increases. However, in any case, the inner diameter of the second center hole 21 is preferably 0.08 to 0.12 mm larger than the outer diameter of the welding wire to be used, and the clearance is preferably 0.04 to 0.06 mm in one side. When the clearance of the second center hole 21 is smaller than this range, a possibility of clogging occurs, and when the clearance is larger than this range, the conductivity may vary.

Since the second center hole 21 having a small clearance is connected to the distal end of the first center hole 11 having a large clearance as described above, the welding wire fed from the proximal end of the adapter 10 is less likely to come into contact with the inner face of the first center hole 11 while passing through the inside of the first center hole 11. However, when passing through the second center hole 21 having a small clearance, the welding wire comes into contact with the inner face of the second center hole, and the welding current intensively flows. In this manner, the current conduction position from the contact tip to the welding wire can be designated to the second center hole 21 of the distal end side housing 20, and the welding current can intensively flow through the welding wire at the inner face of the second center hole 21. Therefore, variation in welding current is suppressed.

As described above, the welding contact tip of the present invention is integrated by screwing the male screw 14 of the adapter 10 into the female screw 23 of the housing 20. A conventional screw-type welding contact tip is screwed while maintaining a thread shape so that the housing 20 can be easily replaced. However, in the welding contact tip of the present invention, a setting torque of a torque wrench is set to be large, and by performing screwing with an excessive torque, the threads are plastically deformed, and crimped and fixed. Therefore, after the coupling, the adapter 10 and the housing 20 are integrated and cannot be separated without using a special tool.

When the threads are plastically deformed, and crimped and fixed in this manner, it is not possible to replace the housing 20 having an enlarged hole diameter as in the conventional case, but there is an advantage that the flank surface of the male screw 14 and the flank surface of the female screw 23 are in face contact when viewed microscopically, the current conduction path from the adapter 10 to the housing 20 is stabilized, and variation in welding current is suppressed. In addition, in the welding contact tip of the present invention, since the distal end side housing 20 is made of a molybdenum alloy having both heat resistance and hardness, the service life is 40 times or more longer than that of the conventional product, and the necessity of replacing the housing 20 is reduced. Therefore, the entire contact tip is replaced when the service life is reached, but the replacement frequency is significantly reduced, so that the total cost is significantly reduced, and the work efficiency of the welding work can be improved.

The advantages of the welding contact tip of the present invention described above are summarized as follows.
(1) By reducing the hole diameter of the distal end side second center hole 23 and increasing the hole diameter of the proximal end side first center hole 11, a welding current intensively flows through the welding wire at the inner face of the second center hole while preventing clogging of the welding wire.
(2) Since the distal end side housing 20 is made of a molybdenum alloy having both heat resistance and hardness, the service life is 40 times or more longer than that of the conventional product.
(3) Since the length of the second center hole 23 of the housing 20 made of hard molybdenum alloy is shortened to 1/3 or less of the length of the first center hole, the perforation operation can be accurately performed.
(4) Since the adapter 10 and the housing 20 are manufactured separately, various combinations can be made according to the outer diameter of the welding wire and the total length of the contact tip, and the manufacturing cost can be reduced.
(5) Since the adapter 10 and the housing 20 are crimped and fixed, a current conduction path from the adapter 10 to the housing 20 is stabilized, and variation in welding current is suppressed. As a result, welding quality can be significantly improved.

### REFERENCE SIGNS LIST

- 1: conventional contact tip body
- 2: center hole of conventional contact tip
- 3: distal end tip
- 10: adapter
- 11: first center hole
- 12: cylindrical body
- 13: small-diameter cylindrical column portion
- 14: male screw
- 15: male screw
- 16: tapered enlarged diameter portion
- 20: housing
- 21: second center hole
- 22: cylindrical portion
- 23: female screw
- 24: hole portion
- 25: tapered hole portion
- 26: body

## Claims

1. A welding contact tip in which a distal end of a copper alloy adapter having a first center hole is screwed to a molybdenum alloy housing having a second center hole having a diameter smaller than a diameter of the first center hole, wherein
a distal end of the first center hole and a proximal end of the second center hole are in contact with each other via a tapered hole portion, wherein
the adapter and the housing are screwed with each other with a large torque to plastically deform threads, and the adapter and the housing are crimped and fixed, and wherein
a length of the second center hole is set to 1/3 or less of a length of the first center hole, and a welding current intensively flows through a welding wire at an inner face of the second center hole.

2. The welding contact tip according to claim 1, wherein the housing is made of a molybdenum alloy containing titanium, zirconium, carbon and a balance of molybdenum, and the adapter is made of a copper alloy containing chromium.

3. The welding contact tip according to claim 1, wherein an inner diameter of the second center hole is set to be larger by 0.08 to 0.12 mm than an outer diameter of a welding wire to be used.

4. The welding contact tip according to claim 1, wherein a total length of the adapter and the housing coupled together is 40 to 45 mm, and a length of the second center hole is 5 to 15 mm.
